(19) Europäisches Patentamt
European Patent Office
Office européen des brevets

(11) EP 3 570 153 B1

(12) EUROPEAN PATENT SPECIFICATION

(45) Date of publication and mention of the grant of the patent:
**11.08.2021 Bulletin 2021/32**

(51) Int Cl.:
*G06F 3/046* (2006.01) *G01D 5/20* (2006.01)
*G06F 3/041* (2006.01) *G06F 3/0354* (2013.01)

(21) Application number: **18172848.6**

(22) Date of filing: **17.05.2018**

(54) **HUMAN-MACHINE INTERFACE DEVICE**

MENSCH-MASCHINE SCHNITTSTELLE

DISPOSITIF D'INTERFACE HOMME MACHINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.11.2019 Bulletin 2019/47**

(73) Proprietor: **IDT Europe GmbH**
**01109 Dresden (DE)**

(72) Inventor: **Janisch, Josef**
**8262 Ilz (AT)**

(74) Representative: **Lippert Stachow Patentanwälte Rechtsanwälte**
**Partnerschaft mbB**
**Krenkelstraße 3**
**01309 Dresden (DE)**

(56) References cited:
**WO-A1-2007/128972 US-B2- 7 451 658**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The invention relates to a human-machine interface device. Human-machine interfaces used to be typically linear or rotating potentiometers. Later, these interfaces were extended by capacitive touch screens or push buttons. While potentiometers provide good haptic feedback, they are bulky, and unreliable. Capacitive touch screens or buttons on the other hand are cheap to manufacture, but have poor haptic feeling and provide reliability issues over temperature and humidity and typically cannot be used with gloves.

A first example of a prior art human-machine interface is a volume control using electro-mechanical contacting potentiometers that have a good haptic feeling. But such interfaces are expensive and unreliable and need a lot of space to install.

A first evolution in prior art was provided by capacitive sensors. Capacitive sensors are cheap to manufacture and have different shapes and colors for differentiation. But capacitive sensors do not provide any haptic feeling, and most of them are unreliable over temperature and humidity.

An exemplary illustration of a capacitive sensor and its functionality is shown in figure 1.

In other documents, touch sensing surfaces based on inductively coupled coils are described. Document WO 2007/128972 A1 discloses a human-machine interface device comprising a printed circuit board including inductive coils inductively coupled to each other, a metallic layer completely covering the inductive coils, a non-metallic soft spacer layer between the PCB and the metallic layer providing a variable distance between the metallic layer and the inductive coils, whereby an inductive position sensor integrated circuit on the PCB detects a pressure on a pushed area of the protective coating which results in an inductive voltage indicating the local position of the pushed area. Document US 7 451 658 B2 also discloses a related device.

In the further development of human-machine interfaces a linear motion sensor with a metallic target was used. The functional principle of such a linear motion sensor with a metallic target will be explained in more detail below.

The basis of the linear motion sensor is a substrate comprising a transmitter coil and individual receiver coil segments that are arranged such that the segments are connected in anti-serial manner and that the sum of all generated voltages is zero (figure 2a). If a metallic target is placed over said coils (figure 2b), at the location of the target the transmitted energy is dissipated in the form of eddy currents inside the target and thus, the magnetic field underneath the target is weakened, which creates an imbalance in the voltages of the receiver coils and the output voltages are non-zero. With a target moving over the coils, depending on the location of the target, a non-zero sum voltage is generated, where the response output voltage versus the target position is sinusoidal in shape (figure 2c) .

The basic principles of such a linear motion sensor will be explained as follows: An LC oscillator generates a magnetic field in a wire loop, namely the transmitter coil. The polarity of the magnetic field (out of or into display as shown in figures 3a and 3b) depends on the direction of current in the loop. In a final design of the linear motion sensor, the sensor comprises a transmitter coil, receiver coils and a target, as shown in figure 4a. For easier understanding, the Rx sine- and Rx cosine- receiver coils are shown on separate graphs, see figures 4b and 5. Inside the transmitter coil area, a first receiver coil (Rx cos) shaped like a lying "8" and a second receiver coil (Rx sin) shifted by half a period according to the first receiver coil are placed. In each Rx loop or receiver coil segment, a voltage is generated, which is dependent on the magnetic field strength and the area exposed by the loop (Va = Vb = Vc+Ve = Vd). Without a target, the resulting receive voltage is zero, as the generated voltages cancel each other (-Va + Vb = 0 and Vc - Vd + Ve = 0). If a metallic target is placed above the substrate comprising a transmitter coil and two receiver coils the transmitted energy below the target is dissipated as eddy currents in the target and reduces the induced secondary voltage in the receiver coils directly below. The closer the target, the more the secondary voltage below the target is reduced. For example: the secondary voltage without a target is about 100% (area "b" - figure 6), and the secondary voltage with a target is about 60% (area "a" - figure 6). Figure 7a shows an example, if the target is placed at 0°, meaning at the most left edge of the linear motion sensor. At 0° target position the cosine voltage $V_{cos}$ has a positive maximum and the sine voltage $V_{sin}$ is zero. If the target is placed at 90° (figure 7b), meaning in the middle of the linear motion sensor, the cosine voltage $V_{cos}$ is zero and the sine voltage $V_{sin}$ has a positive maximum. If the target is placed at 180° (figure 7c), meaning at the most right edge of the linear motion sensor, the cosine voltage $V_{cos}$ has a negative maximum and the sine voltage $V_{sin}$ is zero. It is also possible to use narrow targets, as shown in figure 8. Narrow targets allow a longer movement range with the same coil length, but lead to smaller signal amplitudes. The largest signal is created when the target width is ½ of the coil length, or more precisely is equal to ½ of a coil period.

But a main disadvantage of said linear motion sensors is the need of a moving metallic target. If it should be handled with gloves, the gloves need to have a metallic target in one fingertip or one have to use means that possess the function of said moving metallic target. Another disadvantage is the missing of any haptic feeling.

Therefore, it is an omnipresent wish to seek for reliable, cost effective solutions of human-machine interfaces that are cheap to manufacture and provide haptic feedback as well.

The object of the invention will be solved by a human-machine interface device comprising a printed circuit board (PCB) including inductive coils, a metallic layer completely covering the inductive coils, a non-metallic soft layer between the PCB and the metallic layer providing a variable distance between the metallic layer and the inductive coils, and a protective coating stacked on the metallic layer, the device further comprising an inductive position sensor integrated circuit on the PCB detecting a pressure on a pushed area of the protective coating which results in an inductive voltage indicating the local position of the pushed area, wherein the soft spacer layer is structured laterally with areas of different softness.The functional principle of the inventive human-machine interface is based on the basic principle of a linear motion sensor as described above. In contrast to the linear motion sensor the whole coil area on the printed circuit board (PCB) is covered by a metallic layer, with an equal distance from the inductive coils. The metallic layer or metallic foil is comparable with the former target. The metallic foil is weakening the magnetic field homogenously over the whole area and again the sum of all generated voltages is zero. Due to some distance by a soft spacer material as a soft layer between the inductive coils and the metallic layer, not the entire magnetic field is dissipated in the form of eddy currents; there is still a remaining magnetic field underneath the metallic layer. If the metallic layer is now, for example manually, pushed towards the coils, the gap between coils and metallic layer decreases, and creating more eddy currents and consequently an even weaker magnetic field in said pushed area. This imbalance creates secondary voltages that are non-zero and depends on the local position of the pushed area, allowing absolute position detection of the pushed area relative to the coil length.

Likewise, the amount of the force pushing at the foil can be detected as the amount of force changes the gap between coils and metallic layer. The more force is applied the larger is the inductive secondary signal $V = \sqrt{V_1 \cdot sin^2 + V_2 \cdot cos^2}$, whereas V is the magnitude vector of the receive signal, $V_1$ is the amplitude of a first receive signal and $V_2$ is the amplitude of the second receive signal.

Finally, the inventive human-machine interface does not need a moving metallic target. Rather it uses the touch of a finger or other object, such as a stylus, for example and works with simple gloves as well. Instead of using a moving metallic object as the target, the whole sensor coil area is covered by a metallic foil at some distance, separated by a non-metallic soft spacer material. As explained before, by pushing towards the foil, a local imbalance in the magnetic field over the coils is created, which can be detected by the same means as detecting a moving metallic target.

This method can be used in two ways: one possible application is to push towards the foil and slide it along the surface of the coils underneath the first and second receiver coils in order to increase or decrease the desired setting, for example to increase or decrease the temperature setpoint of a manual climate control slider in a vehicle.

Another possible application using the same set-up is to directly push at the desired setpoint at different sections of the target and release it again. This method would be used in applications where the manual input device provides a selection of several individual modes, such as for example selecting one of four different outlets of a cooling fan (screen, center console, side window, leg area, etc.). In this case, pushing one of the selected areas (options) would result in a different calculated position of the pushed area. For example:

0 < Position < 25% = Option 1 was pushed;
25 < Position < 50% = Option 2 was pushed;
50 < Position < 75% = Option 3 was pushed;
75 < Position < 100% = Option 4 was pushed.

In a very preferred embodiment of the human-machine interface, the soft spacer layer is structured laterally with areas of different softness. The effect of structuring the soft spacer material is to provide a haptic feeling by physically pressing towards the metallic foil. The soft spacer material between the PCB and the metallic layer is structured with areas of different softness to create a haptic counterforce, depending on the location of these harder materials, for example harder on the edges, softer at the inner area, or alternating harder/softer sections over the travel range to indicate different areas. For example, indicating a volume control over five steps using five sections of alternating softer and harder spacer materials.

In an embodiment of the inventive human-machine interface device, the soft spacer layer is of rubber, foam rubber, air cushions or similar material which can be compressed and reverts to its original form once the pressure on it is released.

In a further embodiment of the inventive human-machine interface device, the human-machine interface has a linear shape. This is preferably used in touch screens or in manual interface panels, such as for example the air conditioning control in the center console of a vehicle or as a manual input.

In another embodiment the human-machine interface has a rotary shape. Such a shape can be used for example in the radio volume control in the center console of a vehicle or as a manual input in other construction equipment which is subjected to rough environmental conditions or where the device has to be operated with gloves.

In another further embodiment, the inductive coils comprise at least a transmitter coil and two receiving coils, whereas a first receiver coil produces a sinusoidal output voltage and a second receiver coil produces a cosine output voltage. These coils are arranged in a special manner. The transmitter coil surrounds the receiver coils, whereas the receiver coils are wounded like a lying "8" and are shifted by a half period to each other.

The invention will be explained in more detail using exemplary embodiments.

The appended drawings show

| | |
|---|---|
| Fig. 1 | Illustration of a capacitive sensor and its functionality; |
| Fig. 2 | Inductive coils of a linear motion sensor: a) without a target, b) with a target, c) induced voltages; |
| Fig. 3 | Illustration of explanation of magnetic field generation in the transmitter coil; |
| Fig. 4 | Design of a linear motion sensor: a) inductive coils, b) splitted view of the two receiver coils; |
| Fig. 5 | Illustration of explanation of the induced voltage polarities in the receiver coils: a) first receiver coil, b) second receiver coil; |
| Fig. 6 | Linear motion sensor with a target; |
| Fig. 7 | Linear motion sensor with a target at different positions over the inductive coils; |
| Fig. 8 | Linear motion sensor with a narrow target; |
| Fig. 9 | Inventive human-machine interface (exploded view); |
| Fig. 10 | Inventive human-machine interface (side-view with a interacting gloved hand) a) to e); |
| Fig. 11 | Illustration of the basic functional principle of the inventive human-machine interface of a linear form; |
| Fig. 12 | Illustration of the basic functional principle of the inventive human-machine interface of a rotary form. |

Figure 9 shows the inventive human-machine interface device 1 in an exploded view. The human-machine interface device 1 comprises a printed circuit board (PCB) 2 including inductive coils 3, a metallic layer 11 completely covering the inductive coils 3 and a non-metallic soft spacer layer 10 between the PCB 2 and the metallic layer 11. The non-metallic soft spacer layer 10 provides a variable distance between the metallic layer 11 and the inductive coils 3. Finally a protective coating 12 stacked on the metallic layer 11. An inductive position sensor integrated circuit 9 on the PCB 3 detects a pressure on a pushed area of the protective coating 12 which results in an inductive voltage indicating the local position of the pushed area. One possible application is to push towards the foil and slide it along the surface of the coils underneath the first and second receiver coils (5, 6) in order to increase or decrease the desired setting, for example to increase or decrease the temperature setpoint of a manual climate control slider in a vehicle.

Figure 10a shows a side-view of the inventive human-machine interface 1 exemplary with a gloved hand pushing on the protected layer 12 and the metallic layer 11. Due to the softness of the non-metallic soft spacer layer 10 between the metallic layer 11 and the inductive coils 3 on the PCB 2 the distance between the metallic layer 11 and the inductive coils 3 are reduced in contrast to not pushed areas. The soft spacer material of the soft spacer layer 10 between the PCB and the metallic layer can be structured with areas of different softness to create a haptic counterforce, depending on the location of these harder materials, for example harder on the edges, softer at the inner area, or alternating harder/softer sections over the travel range to indicate different areas. In figure 10 the narrow vertical bars 13 indicate stiffer areas the wider squares 14 between the vertical bars 13 indicate softer areas.

A possible application using the set-up of figure 10a is to directly push at the desired setpoint at different sections (13, 14) of the target and release it again. This method would be used in applications where the manual input device provides a selection of several individual modes, such as for example selecting one of four different outlets (141, 142, 143, 144) of a cooling fan (screen, center console, side window, leg area, etc.). In this case, pushing one of the selected areas (141, 142, 143, 144) would result in a different calculated position of the pushed area. For example:

0 < Position (141) < 25% = Option 1 was pushed;
25 < Position (142) < 50% = Option 2 was pushed;
50 < Position (143) < 75% = Option 3 was pushed;
75 < Position (144) < 100% = Option 4 was pushed.

Figures 11 and 12 illustrate the basic functional principle which is the same as for the linear motion sensor already described above. In figure 11 the inventive human-machine interface has a linear form and in figure 12 a rotary form.

## List of Reference Signs

| | |
|---|---|
| 1 | human-machine interface device |
| 2 | printed circuit board |
| 3 | inductive coils |
| 4 | transmitter coil |
| 5 | first receiver coil |
| 6 | second receiver coil |
| 7 | receiver coil segments |
| 8 | target |
| 9 | inductive position sensor integrated circuit |
| 10 | non-metallic soft spacer layer |
| 11 | metallic layer |
| 12 | protective layer |
| 13 | area of harder material in soft spacer layer |
| 14 | area of softer material in soft spacer layer |
| 141 | pushed position 1 (zone 1) |
| 142 | pushed position 2 (zone 2) |
| 143 | pushed position 3 (zone 3) |
| 144 | pushed position 4 (zone 4) |

**Claims**

1. A human-machine interface device (1) comprising a printed circuit board (2) including inductive coils inductively coupled to each other (3), a metallic layer (11) completely covering the inductive coils (3), a non-metallic soft spacer layer (10) between the PCB (2) and the metallic layer (11) providing a variable distance between the metallic layer (11) and the inductive coils (3), and a protective coating (12) stacked on the metallic layer (11), the device further comprising an inductive position sensor integrated circuit (9) on the PCB (2) detecting a pressure on a pushed area of the protective coating (12) which results in an inductive voltage indicating the local position of the pushed area, wherein the soft spacer layer (10) is structured laterally with areas of different softness (13, 14).

2. The human-machine interface device (1) according to claim 1, wherein the human-machine interface has a linear shape.

3. The human-machine interface device (1) according to claim 1, wherein the human-machine interface has a round shape.

4. The human-machine interface device (1) according to one of the claims 1 to 3, wherein the soft spacer layer (10) is of rubber or foam rubber or air cushions or similar material which can be compressed and reverts to its original form once the pressure on it is released.

5. The human-machine interface device (1) according to one of the claims 1 to 4, wherein the inductive coils (3) comprise at least a transmitter coil (4) and two receiver coils (5, 6), such that a first receiver coil (5) produces a sinusoidal output voltage and a second receiver coil (6) produces a cosine output voltage.

**Patentansprüche**

1. Mensch-Maschine-Schnittstelleneinrichtung (1) umfassend eine Leiterplatte (2) einschließlich induktiver Spulen, die induktiv aneinander gekoppelt sind (3), eine metallische Schicht (11), die die induktiven Spulen (3) vollständig bedeckt, eine unmetallische weiche Abstandshalterschicht (10) zwischen der PCB (2) und der metallischen Schicht (11), die eine variable Distanz zwischen der metallischen Schicht (11) und den induktiven Spulen (3) bereitstellt, und eine auf die metallische Schicht (11) gestapelte Schutzbeschichtung (12), wobei die Einrichtung weiter eine integrierte induktive Positionssensorschaltung (9) auf der PCB (2) umfasst, die einen Druck auf einen gedrückten Bereich der Schutzbeschichtung (12) detektiert, was zu einer induktiven Spannung führt, die die lokale Position des gedrückten Bereichs anzeigt, wobei die weiche Abstandshalterschicht (10) lateral mit Bereichen unterschiedlicher Weichheit (13, 14) strukturiert ist.

2. Mensch-Maschine-Schnittstelleneinrichtung (1) nach Anspruch 1, wobei die Mensch-Maschine-Schnittstelle eine lineare Form aufweist.

3. Mensch-Maschine-Schnittstelleneinrichtung (1) nach Anspruch 1,
wobei die Mensch-Maschine-Schnittstelle eine runde Form aufweist.

4. Mensch-Maschine-Schnittstelleneinrichtung (1) nach einem der Ansprüche 1 bis 3,
wobei die weiche Abstandshalterschicht (10) aus Gummi oder aus Schaumgummi oder Luftkissen oder ähnlichem Material ist, das komprimiert werden kann und zu seiner Ursprungsform zurückkehrt, nachdem der Druck darauf weggenommen ist.

5. Mensch-Maschine-Schnittstelleneinrichtung (1) nach einem der Ansprüche 1 bis 4,
wobei die induktiven Spulen (3) mindestens eine Senderspule (4) und zwei Empfängerspulen (5, 6) umfassen, so dass eine erste Empfängerspule (5) eine sinusförmige Ausgangsspannung erzeugt und eine zweite Empfängerspule (6) eine Kosinus-Ausgangsspannung erzeugt.

**Revendications**

1. Dispositif d'interface homme-machine (1) comprenant une carte de circuit imprimé (2) comportant des bobines inductives (3) couplées par induction les unes aux autres, une couche métallique (11) recouvrant entièrement les bobines inductives (3), une couche d'entretoise molle non métallique (10) entre la PCB (2) et la couche métallique (11) fournissant une distance variable entre la couche métallique (11) et les bobines inductives (3), et un revêtement protecteur (12) empilé sur la couche métallique (11), le dispositif comprenant en outre, sur la PCB (2), un circuit intégré de capteur de position inductif (9) détectant une pression sur une zone poussée du revêtement protecteur (12) qui se solde par une tension inductive indiquant la position locale de la zone poussée, la couche d'entretoise molle (10) étant structurée latéralement avec des zones d'une mollesse différente (13, 14).

2. Dispositif d'interface homme-machine (1) selon la revendication 1, l'interface homme-machine ayant une forme linéaire.

**3.** Dispositif d'interface homme-machine (1) selon la revendication 1, l'interface homme-machine ayant une forme ronde.

**4.** Dispositif d'interface homme-machine (1) selon une des revendications 1 à 3, dans lequel la couche d'entretoise molle (10) est constituée de caoutchouc ou de caoutchouc mousse ou de coussins d'air ou d'un matériau similaire qui peut être comprimé et reprend sa forme initiale une fois que la pression sur celui-ci est relâchée.

**5.** Dispositif d'interface homme-machine (1) selon une des revendications 1 à 4, dans lequel les bobines inductives (3) comprennent au moins une bobine émettrice (4) et deux bobines réceptrices (5, 6), de telle sorte qu'une première bobine réceptrice (5) produit une tension de sortie sinusoïdale et une deuxième bobine réceptrice (6) produit une tension de sortie cosinusoïdale.

Fig. 1

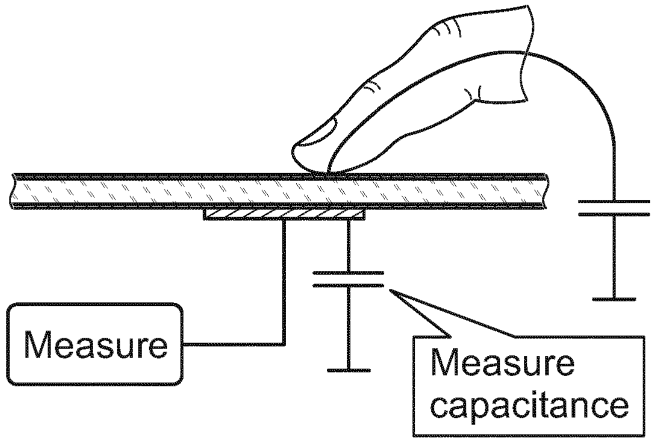
Measure
Measure capacitance

Fig. 2

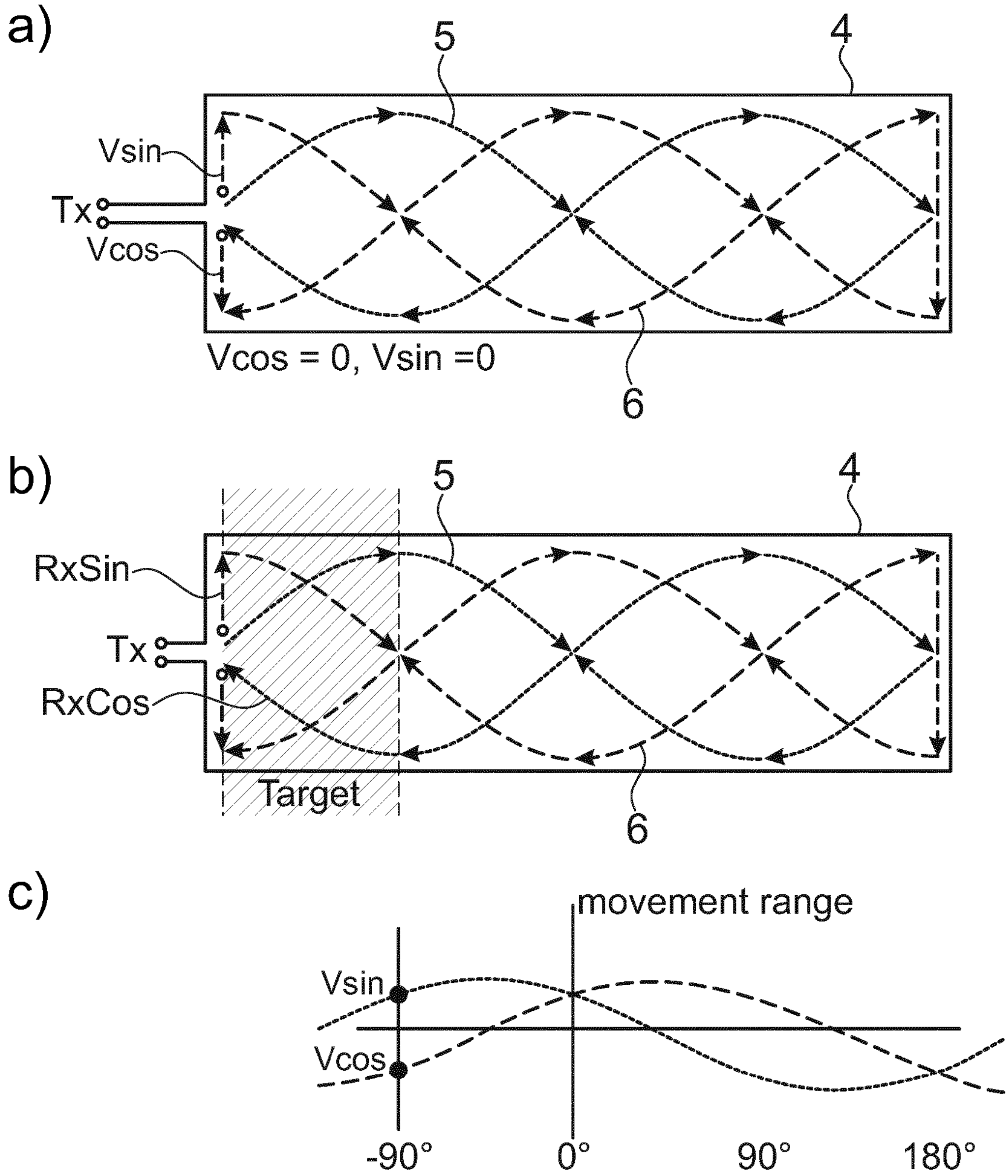
a)
5
4
Vsin
Tx
Vcos
Vcos = 0, Vsin =0
6
b)
5
4
RxSin
Tx
RxCos
Target
6
c)
movement range
Vsin
Vcos
-90°
0°
90°
180°

Fig. 2

a)

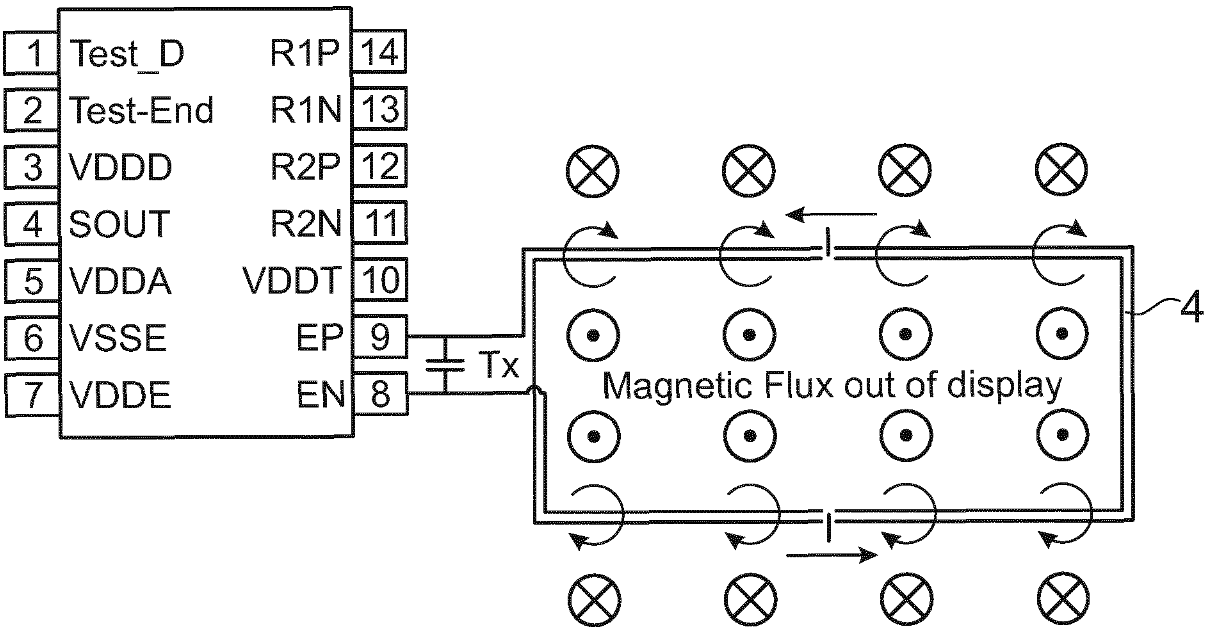
1 Test_D R1P 14
2 Test-End R1N 13
3 VDDD R2P 12
4 SOUT R2N 11
5 VDDA VDDT 10
6 VSSE EP 9
7 VDDE EN 8
Tx
4
Magnetic Flux out of display

b)

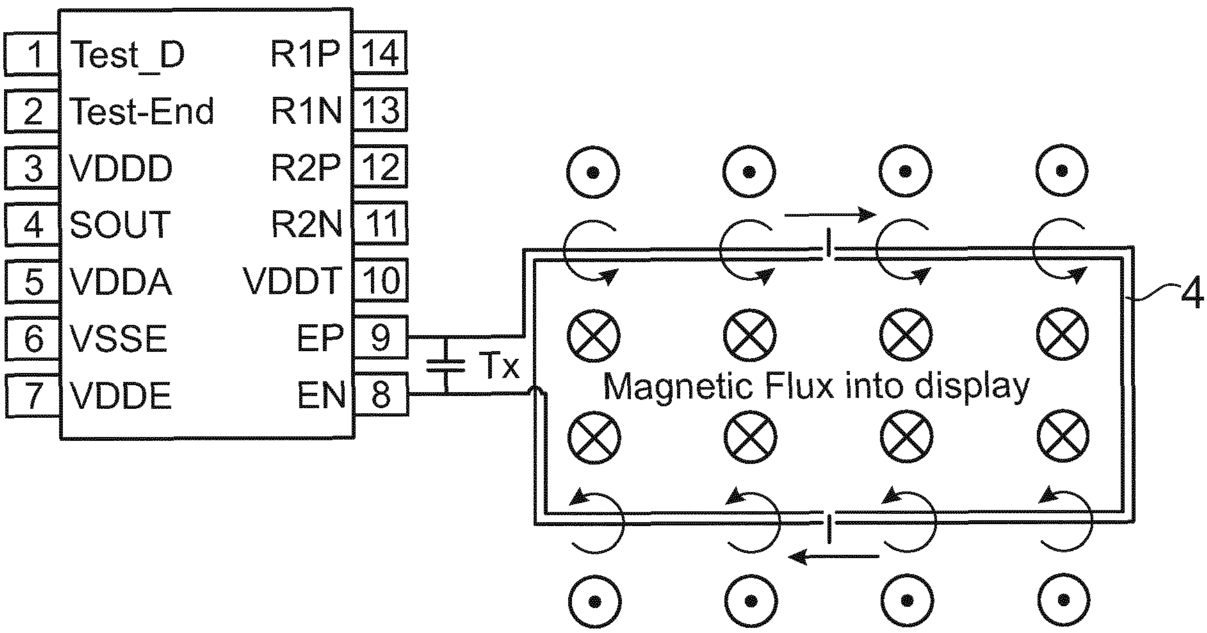
1 Test_D R1P 14
2 Test-End R1N 13
3 VDDD R2P 12
4 SOUT R2N 11
5 VDDA VDDT 10
6 VSSE EP 9
7 VDDE EN 8
Tx
4
Magnetic Flux into display

Fig. 4

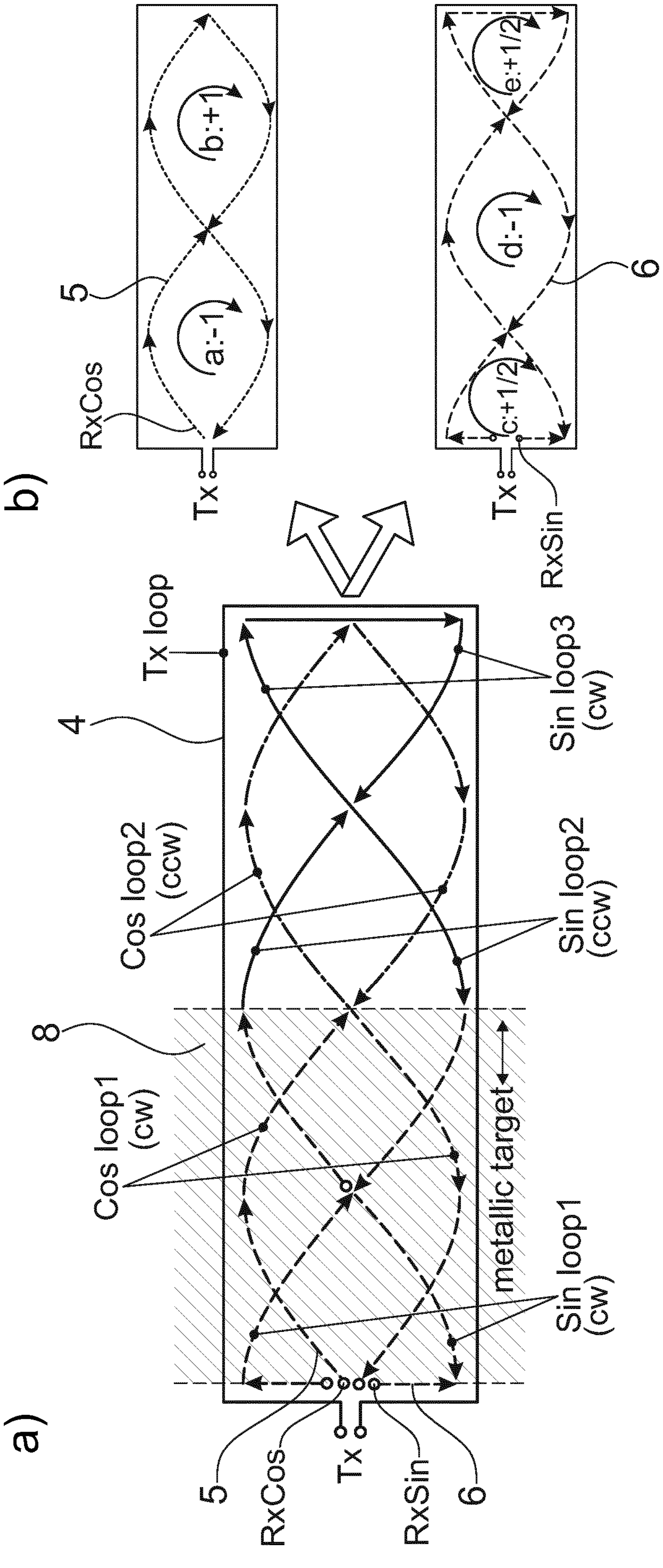
a)
b)
5
RxCos
Tx
RxSin
6
8
4
Tx loop
Cos loop1
(cw)
Cos loop2
(ccw)
Sin loop1
(cw)
Sin loop2
(ccw)
Sin loop3
(cw)
metallic target
a:-1
b:+1
c:+1/2
d:-1
e:+1/2

Fig. 5

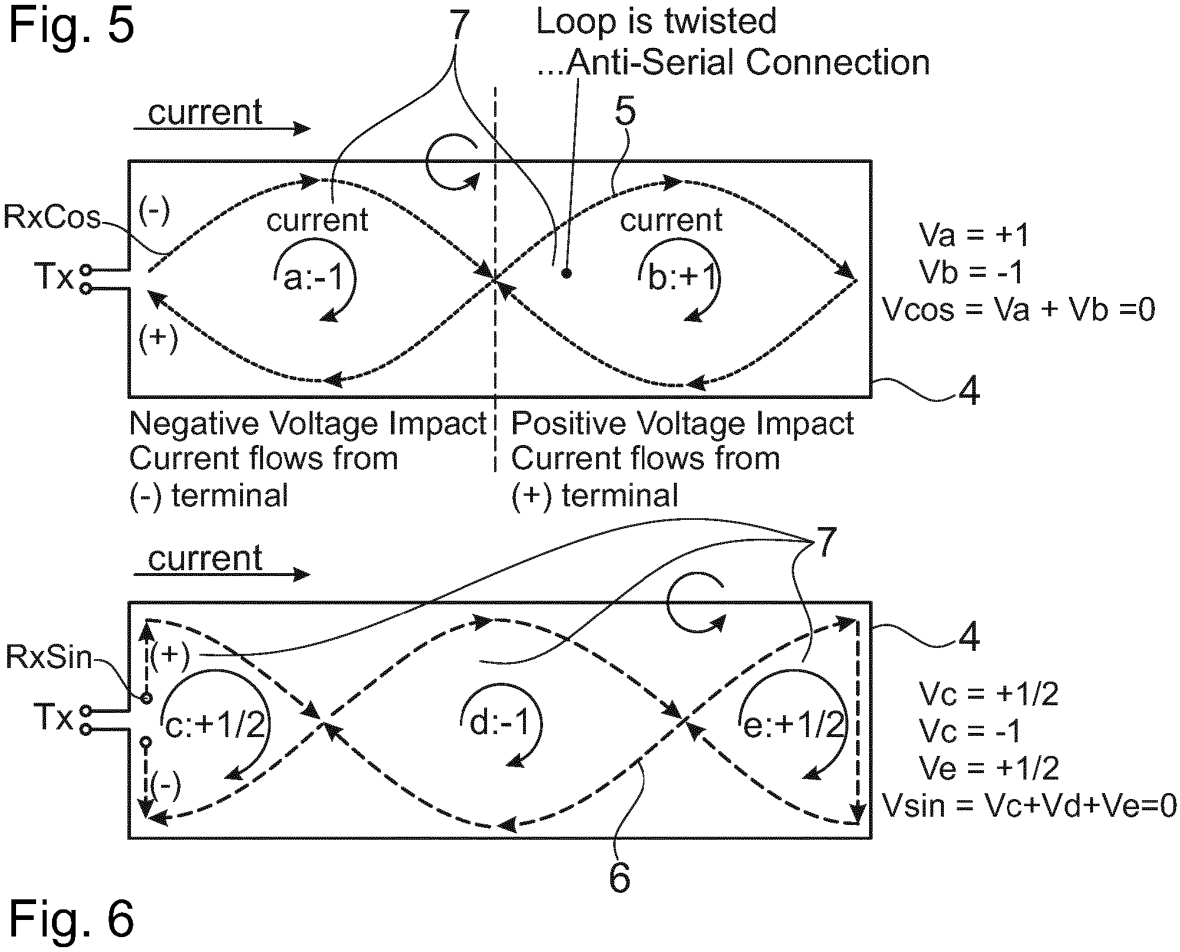

7
Loop is twisted
...Anti-Serial Connection
current
5
RxCos
(-)
current
a:-1
current
b:+1
Tx
(+)
Va = +1
Vb = -1
Vcos = Va + Vb =0
4
Negative Voltage Impact
Current flows from
(-) terminal
Positive Voltage Impact
Current flows from
(+) terminal
current
7
4
RxSin
(+)
Tx
c:+1/2
d:-1
e:+1/2
(-)
Vc = +1/2
Vc = -1
Ve = +1/2
Vsin = Vc+Vd+Ve=0
6


Fig. 6

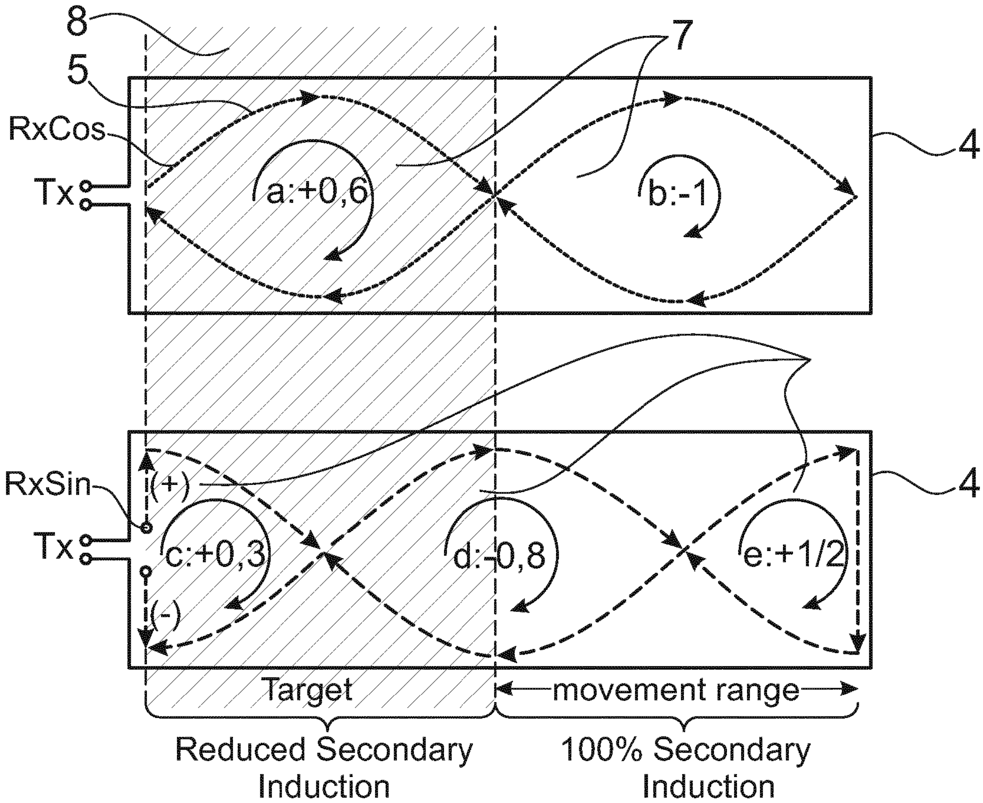

8
5
7
RxCos
Tx
a:+0,6
b:-1
4
RxSin
(+)
Tx
c:+0,3
d:-0,8
e:+1/2
(-)
4
Target
movement range
Reduced Secondary
Induction
100% Secondary
Induction

Fig. 7

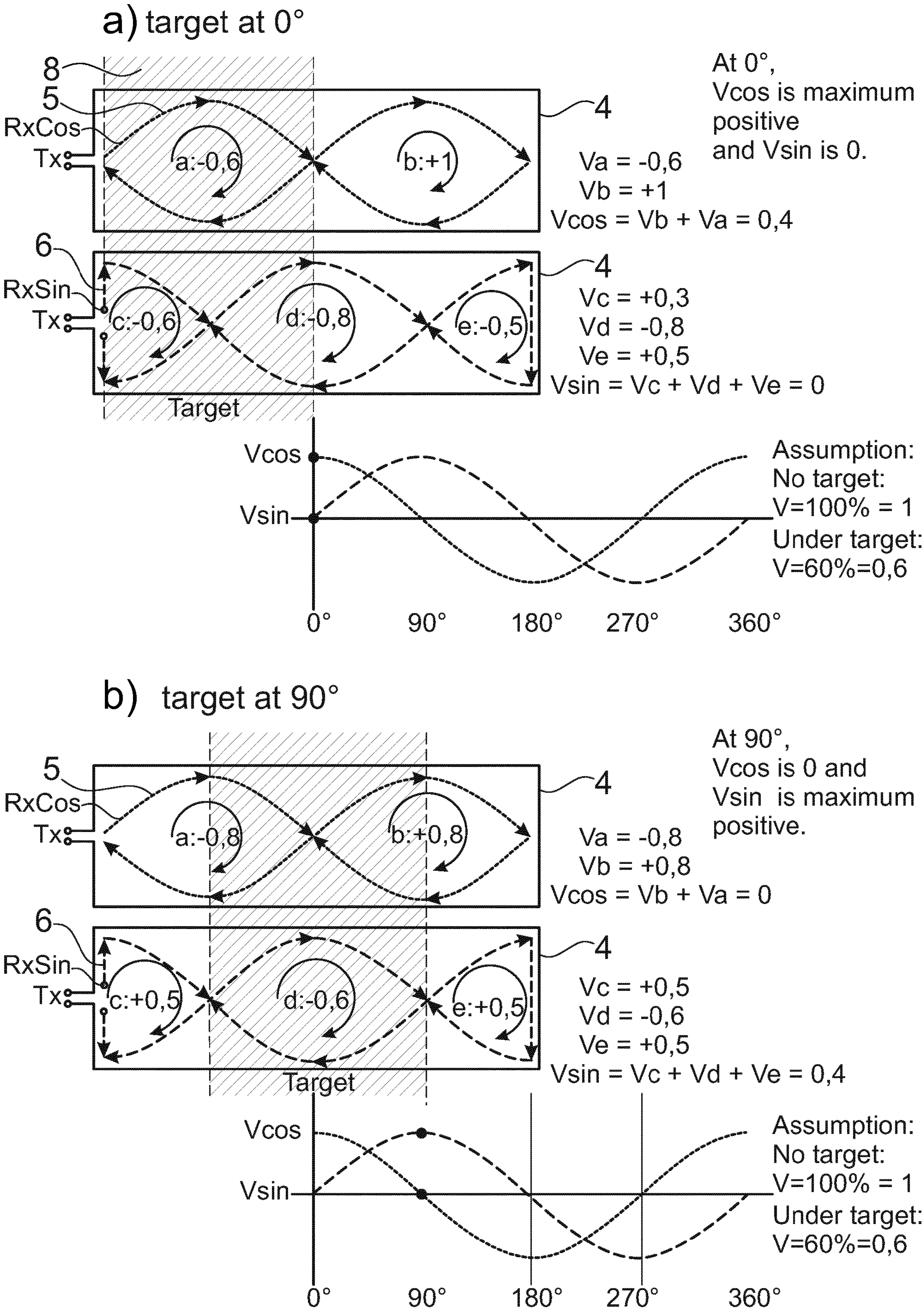
a) target at 0°
8
5
RxCos
Tx
a:-0,6
b:+1
4
At 0°,
Vcos is maximum positive
and Vsin is 0.
Va = -0,6
Vb = +1
Vcos = Vb + Va = 0,4
6
RxSin
Tx
c:-0,6
d:-0,8
e:-0,5
4
Vc = +0,3
Vd = -0,8
Ve = +0,5
Vsin = Vc + Vd + Ve = 0
Target
Vcos
Vsin
Assumption:
No target:
V=100% = 1
Under target:
V=60%=0,6
0°
90°
180°
270°
360°
b) target at 90°
At 90°,
Vcos is 0 and
Vsin is maximum positive.
5
RxCos
Tx
a:-0,8
b:+0,8
4
Va = -0,8
Vb = +0,8
Vcos = Vb + Va = 0
6
RxSin
Tx
c:+0,5
d:-0,6
e:+0,5
4
Vc = +0,5
Vd = -0,6
Ve = +0,5
Vsin = Vc + Vd + Ve = 0,4
Target
Vcos
Vsin
Assumption:
No target:
V=100% = 1
Under target:
V=60%=0,6
0°
90°
180°
270°
360°

c) target at 180°

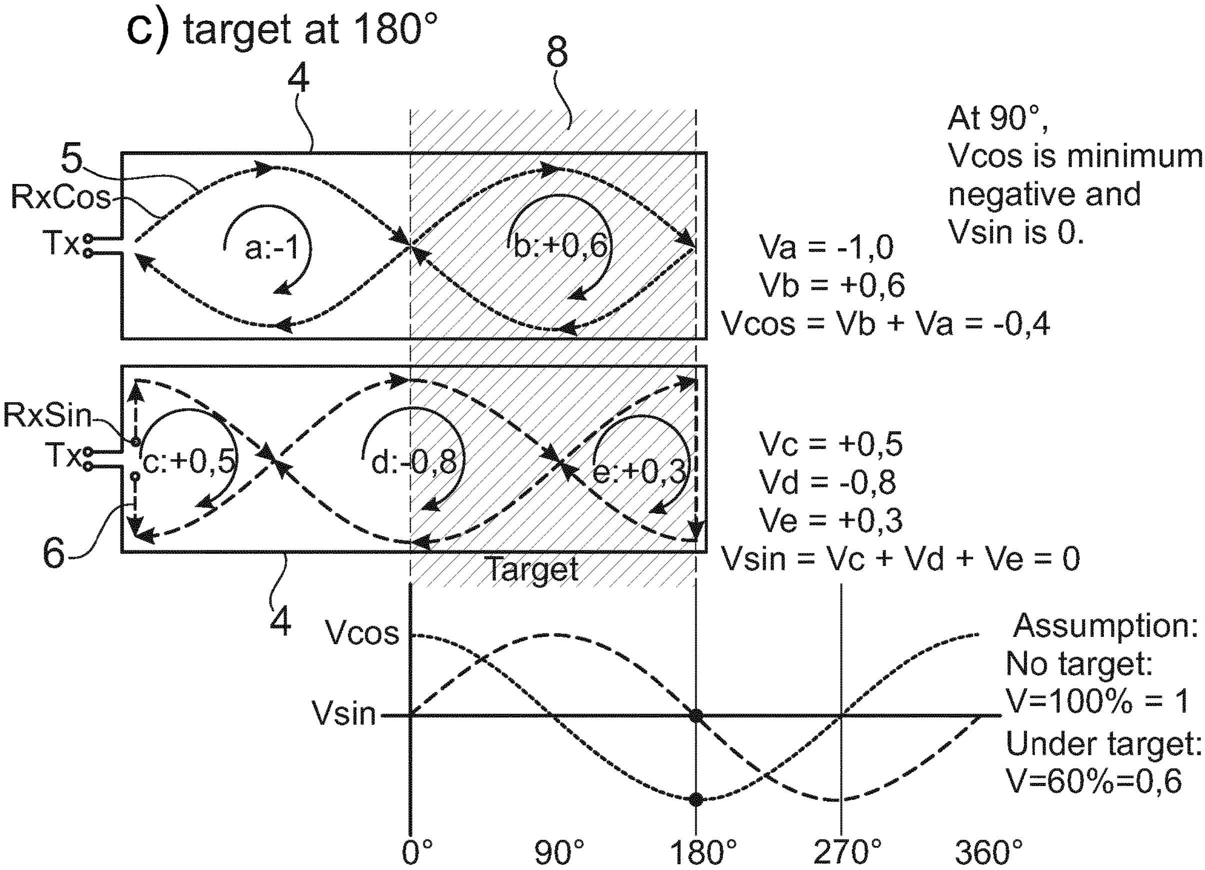


Fig. 8

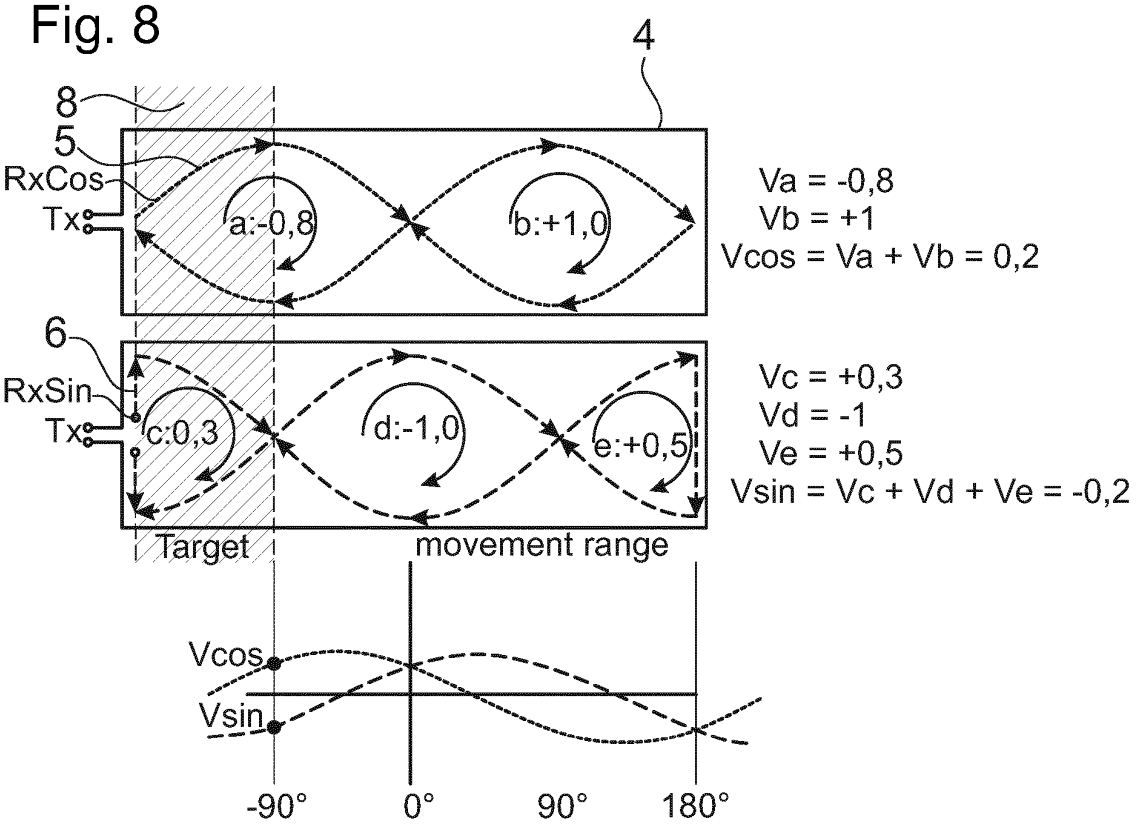

Fig. 9

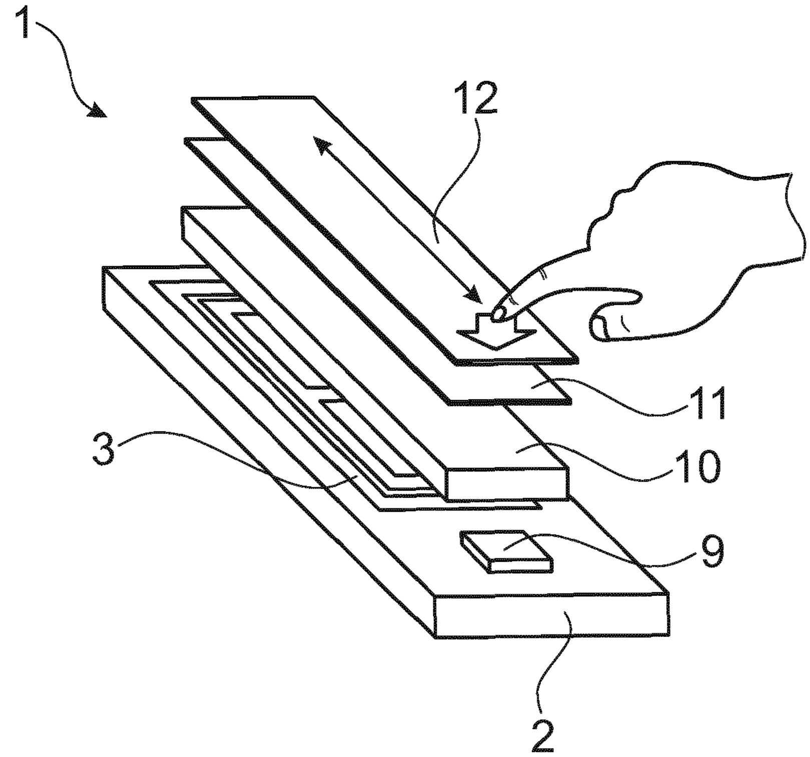


Fig. 10a

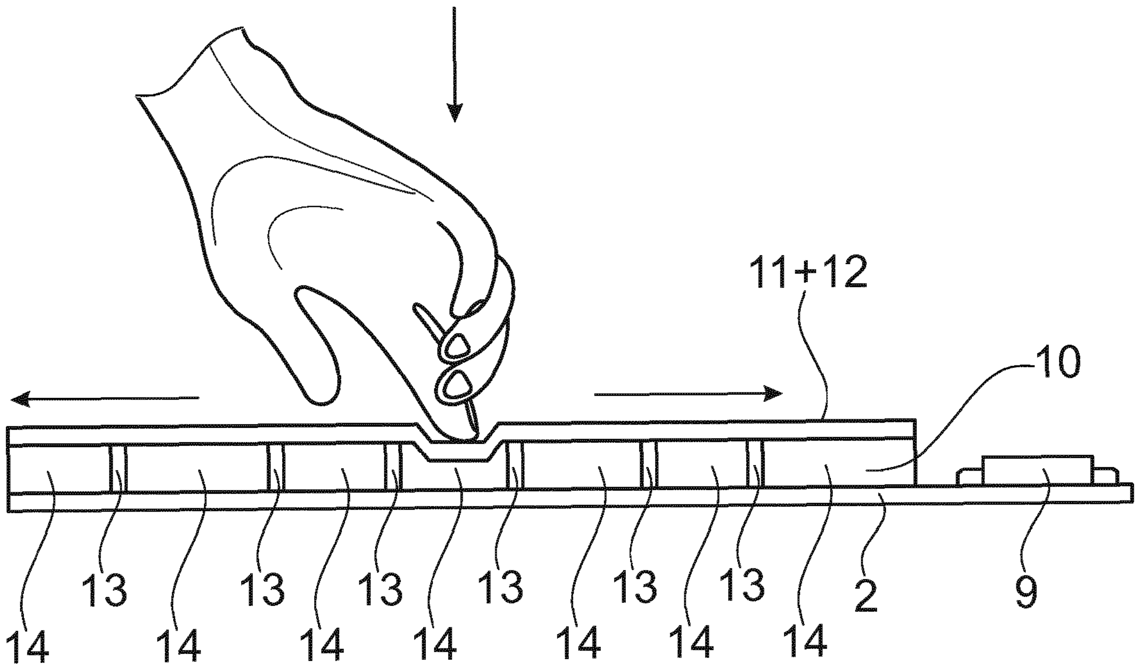

Fig. 10b

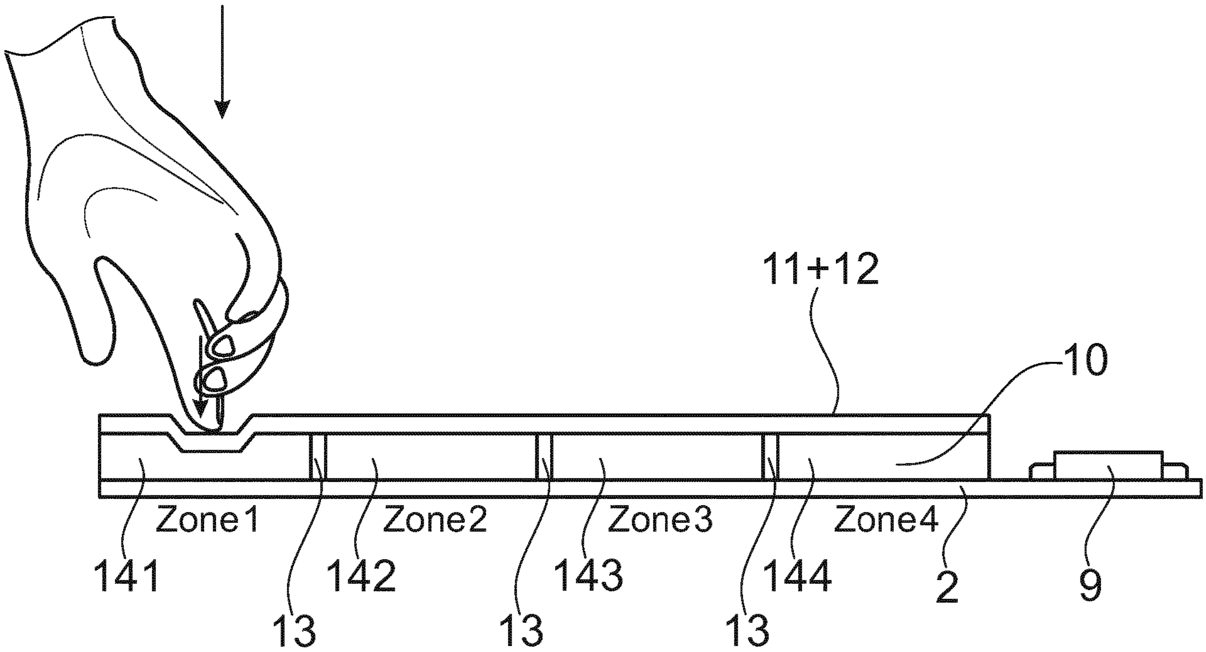


Fig. 10c

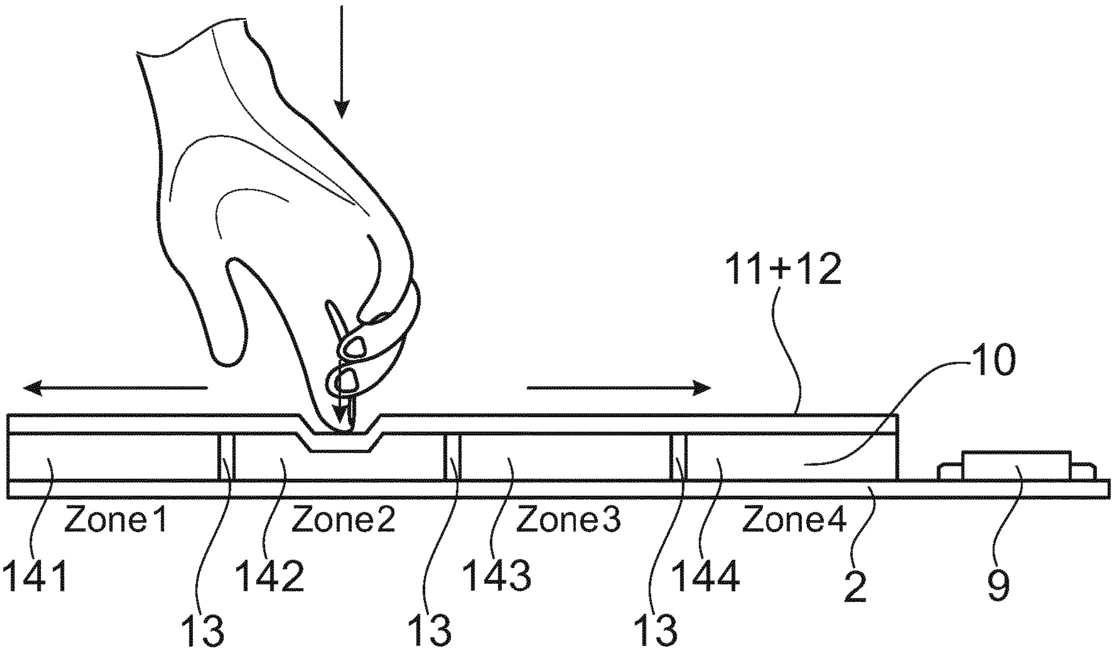

Fig. 10d

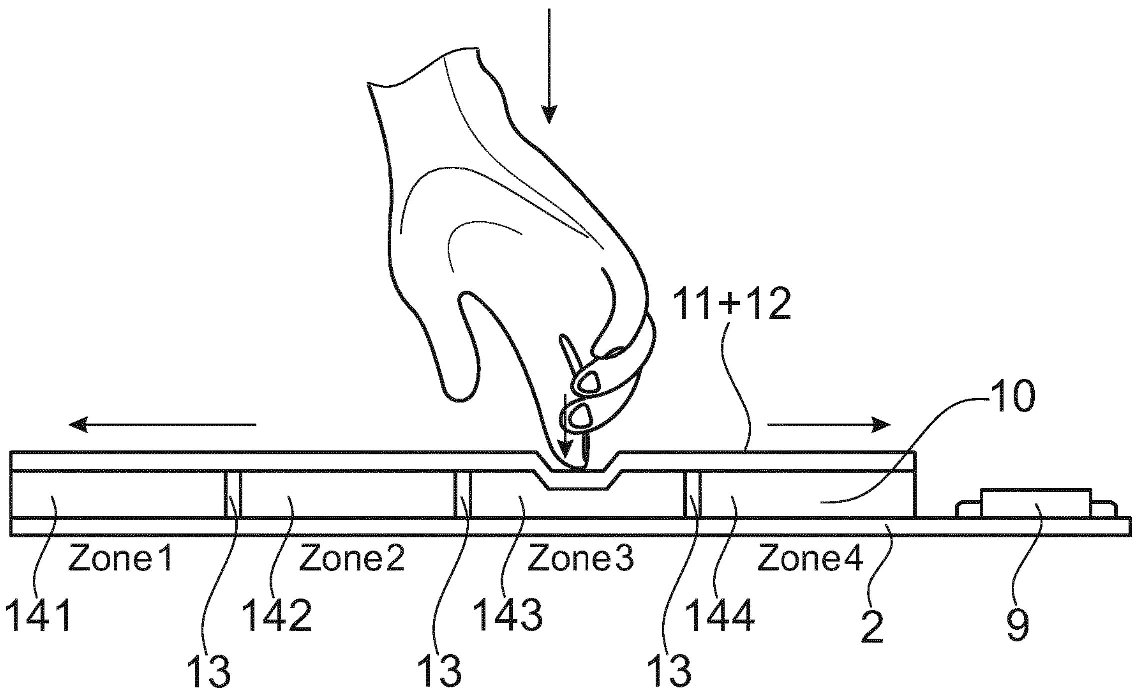


Fig. 10e

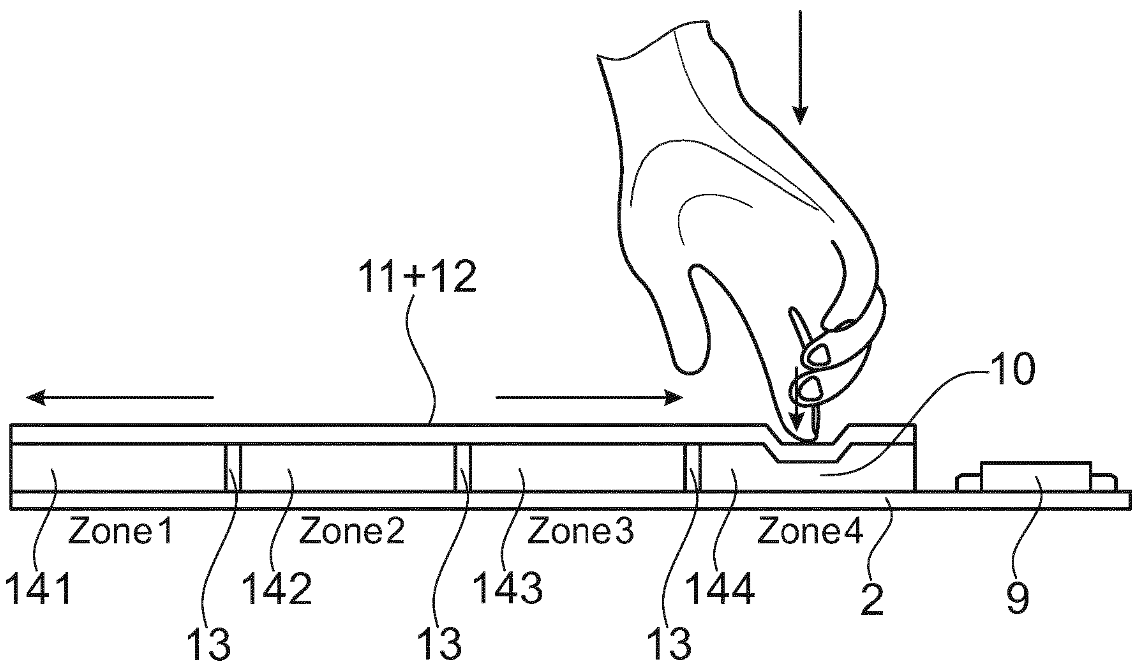

Fig. 11

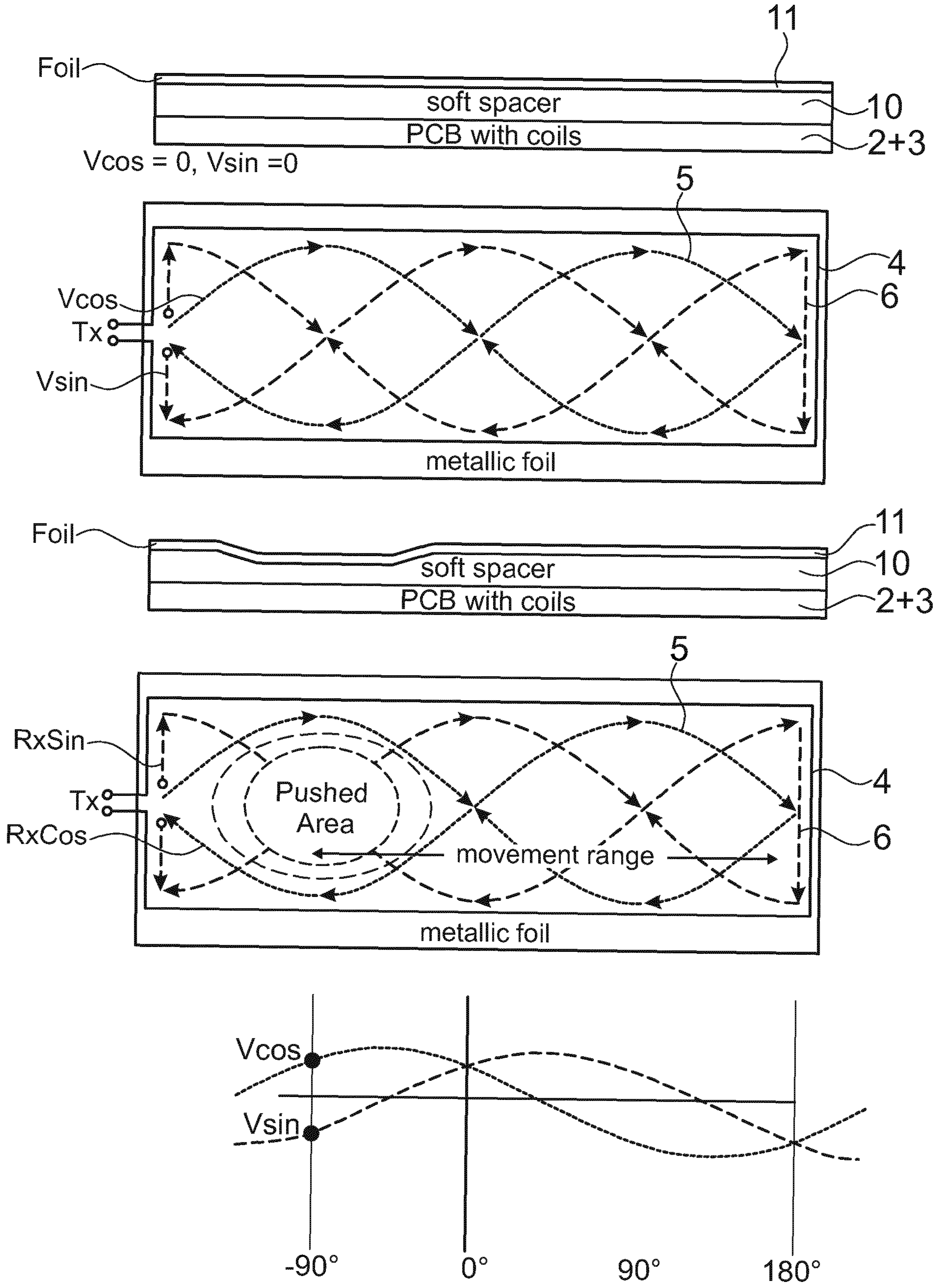
Foil
11
soft spacer
10
PCB with coils
2+3
Vcos = 0, Vsin =0
5
4
6
Vcos
Tx
Vsin
metallic foil
Foil
11
soft spacer
10
PCB with coils
2+3
5
RxSin
Tx
RxCos
Pushed Area
movement range
4
6
metallic foil
Vcos
Vsin
-90°
0°
90°
180°

Fig. 12

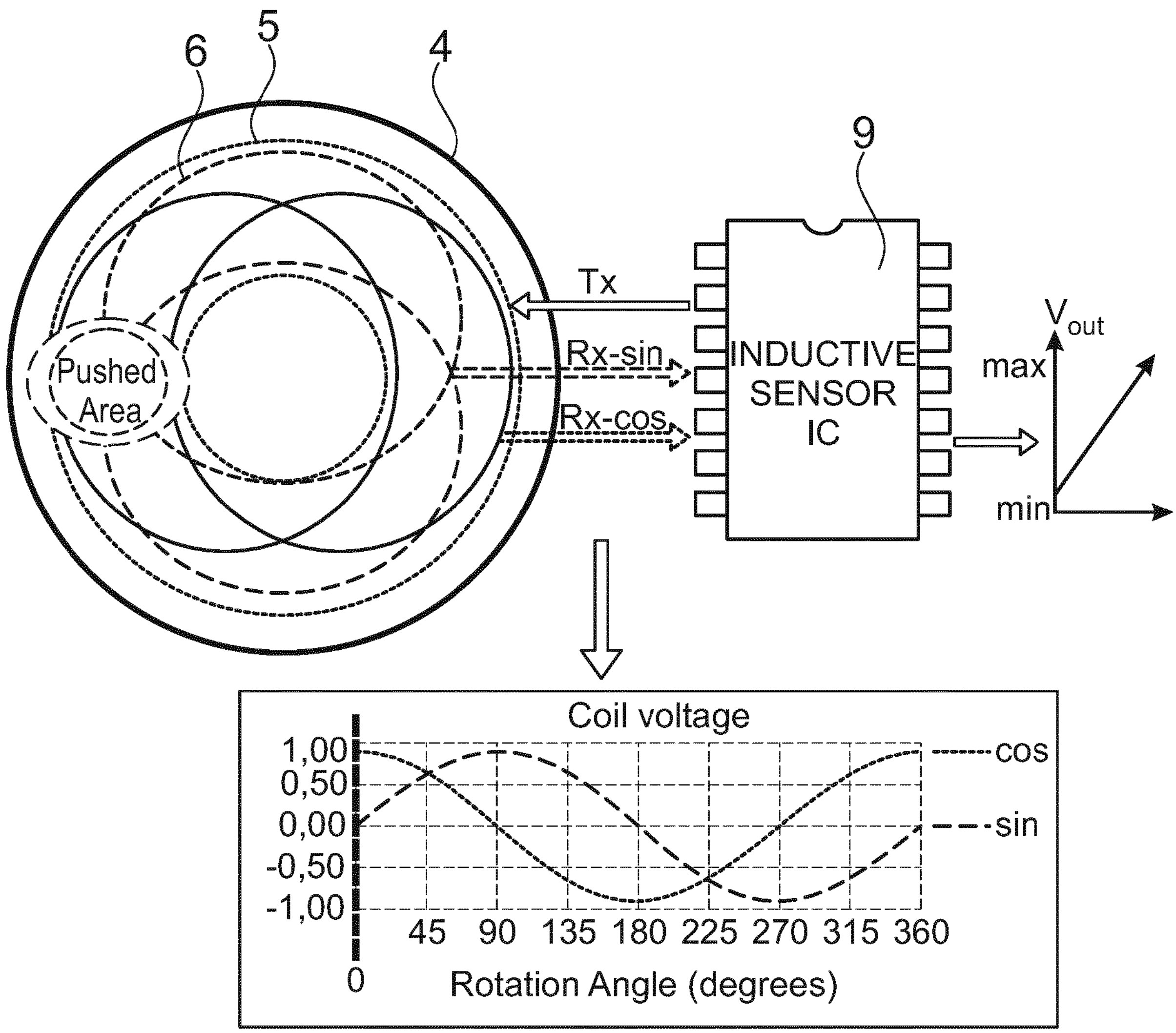
6
5
4
9
Pushed Area
Tx
Rx-sin
Rx-cos
INDUCTIVE SENSOR IC
V out
max
min
Coil voltage
1,00
0,50
0,00
-0,50
-1,00
0
45
90
135
180
225
270
315
360
Rotation Angle (degrees)
cos
sin

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007128972 A1
- US 7451658 B2